# EUROPEAN PATENT APPLICATION

(11) **EP 1 291 150 A1**
(43) Date of publication of application: **12.03.2003**
(21) Application number: 02292178.7
(22) Date of filing: 04.09.2002
(51) Int. Cl.: B29C 47/02, H01B 3/44

(54) **Method of producing an electrical cable insulating material**

(30) Priority: 05.09.2001 JP 2001268583
(71) Applicant: Sumitomo Wiring Systems, Ltd., Yokkaichi-City, Mie, 510-8503 (JP)
(72) Inventor: Arai, Yoko, c/o Sumitomo Wiring Systems, Ltd., Yokkaichi-city, Mie 510-8503 (JP)
(74) Representative: Uchida, Kenji

(57) **Abstract**

The present invention relates to a method for producing a cable protecting material through extruding an olefin-type polymer composition, e.g. an olefin-type thermoplastic elastomer composition. The extruded cable protecting material has a smoothly flowing skin, and forms a well balanced material distribution. As a result, the cable protecting material has a good wear resistance. Such material is formed by mixing and kneading an olefin-type polymer and suitable additives so as to prepare an olefin-type polymer composition, transforming the composition into pellets, and extruding the pellets while the composition temperature is kept between 190°C to 250°C.

## Description

The present invention relates to a method of producing an electrical cable protecting material and, more particularly, to a method of producing an olefin-type protecting material for electrical wires or cables, e.g. in the form of tubes or ribbons, for wire harnesses used in vehicles.

Polyvinyl chloride has been widely used as a coating material for electrical cables used in vehicles, owing to its excellent mechanical strength, the ease with which it can be extruded around an electric cable, and its excellent flexibility, colorability (e.g. paintability) and cost efficiency.

However, due to recent global environmental measures, manufacturers of vehicle parts (including coatings of electrical cables for automobiles) have started to use halogen-free olefin-type polymers e.g. olefin-type thermoplastic elastomers, instead of polyvinyl chloride. In particular, those halogen-free polymers e.g. elastomers are used as a base material, supplemented with a halogen-type flame-retardant such as bromine-type flame retardant (see patent documents JP-A-5-320439, JP-A-10-195254, P2000-86563A, P2000-290439A, P2001-6447A, for example)

When extruding compositions containing olefin-type polymers e.g. elastomers, the surface of the products tends to become rough (melt fractures), when the extrusion temperature is low. As a result, the wear resistance of the products is considerably lowered. Conversely, when the extrusion temperature is too high, there form unbalanced material distribution and cooling-down deformations, thereby considerably bringing down the lower limit of wear resistance.

One object of the present invention is to provide a method for producing a protecting material for electrical cables used in wire harnesses and the like in vehicles, which do not suffer from the problems mentioned above, for example, when producing tubes or sheets (ribbons) by extrusion.

To this end, there is provided a method of producing an electrical cable protecting material, the method comprising the step of extruding an olefin-type polymer composition, such as an olefin-type thermoplastic elastomer composition, at a temperature ranging from about 190°C to about 250°C.

Preferably, the extruding step comprises extruding the composition at a temperature ranging from about 200°C to about 220°C.

Typically, the above method further comprises the step of mixing and kneading an olefin-type polymer and suitable additives, thereby obtaining pellets of the olefin-type polymer composition, the pellets being then supplied to the extruding step.

Suitably, the above extruding step comprises extruding an olefin-type polymer composition, e.g. an olefin-type thermoplastic elastomer composition, whose olefin-type polymer has a JIS A hardness ranging from about 60 to about 95.

Suitably yet, the above extruding step comprises extruding an olefin-type polymer composition, e.g. an olefin-type thermoplastic elastomer composition, whose olefin moiety has 2 to 6 carbon atoms.

Preferably, the extruding step comprises extruding an olefin-type polymer composition, e.g. an olefin-type thermoplastic elastomer composition, whose olefin moiety is formed of propylene-ethylene-propylene copolymer.

Further, the above mixing and kneading step may comprise mixing and kneading, as the suitable additives, at least one agent selected from the group consisting of a bromine-type flame retardant, antimony trioxide, a heat stabilizer agent and a lubricant.

The mixing and kneading step may comprise mixing and kneading a bromine-type flame retardant in a proportion, such that the amount of bromine accounts for about 1 to about 10 % by weight in the total amount of the olefin-type polymer composition.

Further, the mixing and kneading step may comprise mixing and kneading antimony trioxide in a proportion of at least about 0.5 parts by weight, relative to 100 parts by weight of olefin-type polymer.

Further yet, the mixing and kneading step may comprise mixing and kneading a heat stabilizer agent in a proportion of at least about 0.2 parts by weight, relative to 100 parts by weight of olefin-type polymer.

Further still, the mixing and kneading step may comprise mixing and kneading a lubricant in a proportion of at least about 0.2 parts by weight, relative to 100 parts by weight of olefin-type polymer.

The invention also relates to an electrical cable protecting material, the material being obtainable by the methods described above, e.g. by a method comprising the step of extruding an olefin-type polymer composition, e.g. an olefin-type thermoplastic elastomer composition, at a temperature ranging from about 190°C to about 250°C.

Preferably, the above material is obtainable by a method comprising the step of extruding an olefin-type polymer composition, e.g. an olefin-type thermoplastic elastomer composition, at a temperature ranging from about 200°C to about 220°C.

The invention further relates to a tube or sheet made of an electrical cable protecting material, the material being obtainable by the methods described above, e.g. by a method comprising the step of extruding an olefin-type polymer composition, e.g. an olefin-type thermoplastic elastomer composition, at a temperature ranging from about 190°C to about 250°C.

Preferably, the above material is obtainable by a method comprising the step of extruding an olefin-type polymer composition, e.g. an olefin-type thermoplastic elastomer composition, at a temperature ranging from about 200°C to about 220°C.

There is further provided a wire harness comprising a plurality of electrical cables, each electrical cable being coated with a tube or sheet made of an electrical cable protecting material. The material is obtainable by the methods described above, e.g. by a method comprising the step of extruding an olefin-type polymer composition, e.g. an olefin-type thermoplastic elastomer composition, at a temperature ranging from about 190°C to about 250°C.

Preferably, the above material is obtainable by a method comprising the step of extruding an olefin-type polymer composition, e.g. an olefin-type thermoplastic elastomer composition, at a temperature ranging from about 200°C to about 220°C.

The above, and the other objects, features and advantages of the present invention will be made apparent from the following description of the preferred embodiments, given as non-limiting examples, with reference to the appended drawings, in which:
- Fig. 1 schematically shows a blade used for a scrape test; and
- Fig. 2 shows the arrangement of the blade and a sample of olefin-type polymer composition, when a scrape test is carried out.

Olefin-type thermoplastic elastomer compositions, as an example of olefin-type polymer compositions, are prepared and characterized as described herebelow.

An olefin-type thermoplastic elastomer of the invention contains olefin as main component (i.e. accounting for at least 50% by weight of a repeating unit). It has a JIS A hardness ranging typically from 60 to 95 and preferably from 70 to 93. The JIS A hardness is measured by a Durometer Type A, according to the method defined in Japanese Industrial Standards (JIS) K 7215 (pages 434 to 438).

Olefins having 2 to 6 carbon atoms, preferably 2 to 4 carbon atoms, e.g. ethylene, propylene and butylene, are preferably used.

The olefin-type thermoplastic elastomer may be a homopolymer or a copolymer. Further, the type of copolymer to be used is not particularly limited. However, a propylene-ethylene-propylene copolymer is preferably used.

Examples of commercially available olefin-type thermoplastic elastomers include Catalloy KS-353P, Catalloy KS-081P, Catalloy KS-021P manufactured by Montell SDK Sunrise, and PER T310E manufactured by Tokuyama.

The type of bromine-based flame retardant to be used is not particularly limited for the purpose of the present invention. Bromine-type flame-retardants hitherto used for the resins and rubbers can also be used in the invention. A particularly suitable example of bromine-containing compounds usable as flame retardants includes derivatives of Tetrabromobisphenol A.

Examples of commercially available flame retardants include Fire Guard 3100 manufactured by Teijin Chemicals, Ltd. (bromine atom contents: 68% by weight) and Flame Cut 121R manufactured by Tosoh Co. Ltd. (bromine atom contents: 67% by weight).

The bromine-type flame retardant is added such that the amount of halogen varies from about 1 to about 10 % by weight, preferably from about 1.2 to about 5 % by weight, in the total weight of olefin-type thermoplastic elastomer composition.

When the amount of bromine-type flame retardant is less than the above lower limit, the composition does not procure a sufficient flame retardant property. On the contrary, when the amount of bromine-type flame retardant is higher than the above upper limit, the specific gravity of the composition becomes too high, thereby preventing the composition from weight reduction.

Antimony trioxide is added in a proportion of at least about 0.5 parts by weight, preferably at least about 1 part by weight, relative to 100 parts by weight of olefin-type thermoplastic elastomer.

When the content of antimony trioxide is less than about 0.5 parts by weight, the compound is not endowed with a sufficient flame retardant property. Though antimony trioxide has no particular upper limit, when it is added in excess, the specific gravity of the composition becomes too high.

In order to improve the thermal stability of the olefin-type thermoplastic elastomer composition, a heat stabilizer agent (oxidation- and aging-preventing agent) can be added. Examples of such heat stabilizer agent include hindered phenol-type anti-aging agents, monophenol-type anti-oxidants, bisphenol-type anti-oxidants, trisphenol-type antioxidants, polyphenol-type antioxidants, thiobisphenol-type antioxidants and phosphorous ester-type anti-aging agents.

Commercially available examples of such products include Tominox TT (hindered phenol-type anti-aging agent manufactured by Yoshitomi Finechemical Co. Ltd), Nocrack 200 (monophenol-type anti-aging agent manufactured by Ouchi Shinko Chemical Industrial Co. Ltd), Nocrack NS-6 (bisphenol-type anti-aging agent manufactured by Ouchi Shinko Chemical Industrial Co. Ltd) and Nocrack 300 (thiobisphenol-type anti-aging agent manufactured by Ouchi Shinko Chemical Industrial Co. Ltd).

The heat stabilizer agent is commonly added in a proportion of at least about 0.2 parts by weight, preferably at least about 0.5 parts by weight, relative to 100 parts by weight of the olefin-type thermoplastic elastomer.

A lubricant can also be added in the olefin-type thermoplastic elastomer composition of the invention in order to improve its moldability. Such lubricants include, for instance, fatty acids, metal salts thereof, amides thereof and the like.

The lubricant is added in a proportion of at least about 0.2 parts by weight, preferably at least about 0.5 parts by weight, relative to 100 parts by weight of olefin-type thermoplastic elastomer.

Further, any known additive, which is commonly used in the elastomer compositions for wire harness parts material, may be added to the olefin-type thermoplastic elastomer composition of the invention. Examples of such additives include any kind of colorant and charge-preventing agent. The amount of additive may be determined as a function of its type.

In the present invention, the components or additives mentioned above may be mixed and kneaded according to any known method and transformed into pellets by means of a pelletizer. The obtained pellets may be extruded so as to obtain a protecting material. Conditions for kneading and pelletizing are not particularly limited. The same conditions as in the prior art can be used.

According to the method of the present invention, a composition is extruded at a temperature ranging from about 190°C to about 250°C, preferably from about 200°C to about 220°C. By regulating the composition temperature within the above range, the viscosity of the composition can be adjusted into a suitable range. As a result, the extruded material forms a smoothly flowing surface, free from unbalanced material distribution. The protecting material thus produced has an improved wear resistance.

The extrusion conditions, except for those as to composition temperatures, are not particularly limited in the present invention.

### Examples

The present invention is now explained in more detail with reference to the following Examples (Ex) and Comparatives Examples (Com Ex).

### Examples 1 to 5.

The compositions (Ex 1 to 5) shown in Table 1 were prepared by mixing respective components in indicated amounts, and by kneading them at about 180°C for about 10 minutes in a pressurized kneader (volume: 20 *l*). The compositions were then transformed into pellets by a pelletizer. The oxygen index of the pellets obtained, which allows to evaluate the flame-retarding properties of the composition, was measured according to JIS K 7201. When OI is higher than 27, the composition is considered as good. The results of the evaluation are also shown in Table 1.

**Table 1**

| components | Ex 1 | Ex 2 | Ex 3 | Ex 4 | Ex 5 |
|---|---|---|---|---|---|
| olefin-type thermoplastic elastomer ¹⁾ | 100 | 100 | 100 | 100 | 100 |
| bromine-type flame retardant ²⁾ | 1.8 | 2.5 | 3 | 3.5 | 5 |
| antimony trioxide 3) | 0.9 | 1.3 | 1.5 | 1.8 | 2.5 |
| heat stabilizer agent⁴⁾ | 1 | 1 | 1 | 1 | 1 |
| zinc stearate ⁵⁾ | 0.5 | 0.5 | 0.5 | 0.5 | 0.5 |
| calcium stearate ⁵⁾ | 0.5 | 0.5 | 0.5 | 0.5 | 0.5 |
| flame retardancy assessed as "OI" | 27 | 27.5 | 28 | 29 | 31 |
| halogen content (weight %) | 1.2 | 1.6 | 1.9 | 2.2 | 3.1 |

| | | | | | |
|---|---|---|---|---|---|
| 1) Catalloy KS-081P manufactured by Montell SDK Sunrise | | | | | |
| 2) Fire Guard 3100 manufactured by Teijin Chemicals, Ltd (containing 68% by weight of bromine atom) | | | | | |
| 3) manufactured by Mikuni Seiren Co. Ltd. | | | | | |
| 4) hindered phenol-type anti-aging agent manufactured by Yoshitomi Finechemical Co. Ltd. | | | | | |
| 5) manufactured by Mizusawa Industrial Chemicals, Ltd. | | | | | |

### Examples 1 to 4 and Comparative Examples 1 to 4

The components of the Example 3 shown in Table 1 were mixed together in respective amounts, kneaded for about 10 minutes at about 180°C in a pressurized kneader (volume: 20 l), and transformed into pellets using a pelletizer. A wire-harness protecting tube (thickness: 0.3 mm; internal diameter: 10 mm) was formed by extrusion of the pellets obtained, which were extruded in an extruder (diameter: 50 mm) at an extrusion speed (line speed) of 35 m/min. The temperatures of the composition (resin) during molding are shown in Tables 2 and 3.

The external aspect of the product obtained (extruded skin and material distribution) was evaluated. The wear resistance and tensile strength of the products were also measured according to the method explained hereafter.

### Wear resistance (scrape test)

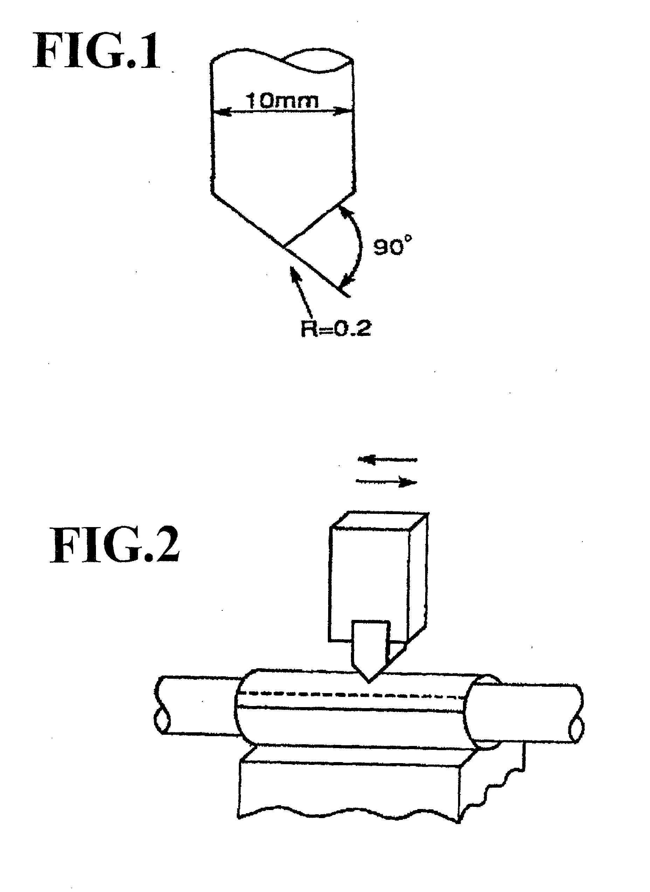

As shown in Figure 2, a blade (made of a quenched steel) shown in Figure 1 was reciprocated in order to impart a to-and-fro motion on the sample, a 10N force being applied. The blade was reciprocated at a rate of one to-and-fro motion / second at 23 °C, with a reciprocation amplitude of 10 mm. The number of to-and-fro cycles, counted until the complete abrasion and disappearance of the sample, was recorded. The number in excess of 150 was considered as good result.

### Tensile strength

The tensile strength up to breaking point was measured according to the tensile-strength test of JIS K 6310. The required value was considered to be at least 15.7 MP a.
The results are shown in Tables 2 and 3.

**Table 2**

| | Ex 1 | Ex 2 | Ex 3 | Ex 4 |
|---|---|---|---|---|
| composition temperature (°C) | 190 | 210 | 230 | 250 |
| external aspect | good | good | good | good |
| wear resistance (number of to-and-fro cycles) | 250 | 270 | 230 | 250 |
| tensile strength (MPa) | 28.6 | 29.4 | 28.3 | 27.5 |

**Table 3**

| | Com Ex 1 | Com Ex 2 | Com Ex 3 | Com Ex 4 |
|---|---|---|---|---|
| composition temperature (°C) | 170 | 180 | 260 | 270 |
| external aspect | bad | bad | bad | bad |
| wear resistance (number of to-and-fro cycles) | 30 | 50 | 120 | 110 |
| tensile strength (MPa) | 14.9 | 15.1 | 20.5 | 19.7 |

When the composition (resin) temperature was lower than about 180°C during extrusion, melt fractures appeared on the surface of the tube formed. When the temperature was higher than about 250°C, an unbalanced material distribution was formed.

## Claims

1. A method of producing an electrical cable protecting material, said method comprising the step of extruding an olefin-type polymer composition at a temperature ranging from about 190°C to about 250°C.

2. The method according to claim 1, wherein said extruding step comprises extruding an olefin-type thermoplastic elastomer composition.

3. The method according to claim 1 or 2, wherein said extruding step comprises extruding said olefin-type polymer composition at a temperature ranging from about 200°C to about 220°C.

4. The method according to any one of claims 1 to 3, wherein said method further comprises the step of mixing and kneading an olefin-type polymer and suitable additives, thereby obtaining pellets of said olefin-type polymer composition, said pellets being then supplied to said extruding step.

5. The method according to any one of claims 1 to 4, wherein said extruding step comprises extruding an olefin-type polymer composition, whose olefin-type polymer has a JIS A hardness ranging from about 60 to about 95.

6. The method according to any one of claims 1 to 5, wherein said extruding step comprises extruding an olefin-type polymer composition, whose olefin moiety has 2 to 6 carbon atoms.

7. The method according to any one of claims 1 to 6, wherein said extruding step comprises extruding an olefin-type polymer composition, whose olefin moiety is formed of propylene-ethylene-propylene copolymer.

8. The method according to claim 4, wherein said mixing and kneading step comprises mixing and kneading, as said suitable additives, at least one agent selected from the group consisting of a bromine-type flame retardant, antimony trioxide, a heat stabilizer agent and a lubricant.

9. The method according to claim 8, wherein said mixing and kneading step comprises mixing and kneading a bromine-type flame retardant in a proportion, such that the amount of bromine accounts for about 1 to about 10 % by weight in the total amount of said olefin-type polymer composition.

10. The method according to claim 8 or 9, wherein said mixing and kneading step comprises mixing and kneading antimony trioxide in a proportion of at least about 0.5 parts by weight, relative to 100 parts by weight of olefin-type polymer.

11. The method according to any one of claims 8 to 10, wherein said mixing and kneading step comprises mixing and kneading a heat stabilizer agent in a proportion of at least about 0.2 parts by weight, relative to 100 parts by weight of olefin-type polymer.

12. The method according to any one of claims 8 to 11, wherein said mixing and kneading step comprises mixing and kneading a lubricant in a proportion of at least about 0.2 parts by weight, relative to 100 parts by weight of olefin-type polymer.

13. An electrical cable protecting material obtainable by the method defined in any one of claims 1 to 12.

14. A tube or sheet made of an electrical cable protecting material, said material being obtainable by the method defined in any one of claims 1 to 12.

15. A wire harness comprising a plurality of electrical cables, each electrical cable being coated with a tube or sheet made of an electrical cable protecting material, said material being obtainable by the method defined in any one of claims 1 to 12.
